Europäisches Patentamt

European Patent Office

Office européen des brevets

(19)

(11) Numéro de publication : **0 007 881**
**B1**

(12) # FASCICULE DE BREVET EUROPÉEN

(45) Date de publication du fascicule du brevet :
01.09.82

(21) Numéro de dépôt : 79420032.9

(22) Date de dépôt : 16.07.79

(51) Int. Cl.³ : **G 07 C   5/08, G 01 M 15/00,**
**B 60 K 20/16, G 09 B 19/16**

(54) Procédé et dispositif pour aider à la conduite d'un véhicule routier.

(30) Priorité : 18.07.78 FR 7822051

(43) Date de publication de la demande :
06.02.80 (Bulletin 80/03)

(45) Mention de la délivrance du brevet :
01.09.82 Bulletin 82/35

(84) Etats contractants désignés :
BE DE GB IT NL SE

(56) Documents cités :
DE A 2 509 354
DE A 2 715 527
FR A 2 265 568
US A 3 906 437
US A 4 038 634

(73) Titulaire : **RENAULT VEHICULES INDUSTRIELS**
Société dite:
**30 Quai Claude Bernard**
**F-69007 Lyon (FR)**

(72) Inventeur : **Bonnetain, Yves**
**25 rue Laurent Carle**
**F-69008 Lyon (FR)**
Inventeur : **Sibeud, Jean-Paul**
**Sous Vignes**
**F-69360 Chaponnay (FR)**

(74) Mandataire : **Maisonnier, Jean**
**Bureau Maisonnier 28 Rue Servient**
**F-69003 Lyon (FR)**

Imprimerie Jouve, 18, rue St-Denis, 75001 Paris, France

EP 0 007 881 B1

« Procédé et dispositif pour aider à la conduite d'un véhicule routier »

La présente invention concerne un procédé et un dispositif pour aider à la conduite d'un véhicule routier.

On sait que la formation des chauffeurs routiers, et notamment des chauffeurs des véhicules lourds, s'efforce d'apporter à ces chauffeurs, entre autres choses :

— une meilleure connaissance des divers états de fonctionnement du groupe moto-propulseur du véhicule ;

— une définition des zones de fonctionnement devant être privilégiées dans le diagramme couple/régime du moteur ;

Ceci doit permettre :

— une réduction de l'usure du moteur et de sa transmission ;

— une optimisation de la consommation en combustible du véhicule ;

— une réduction des nuisances telles que les émissions de bruit à l'intérieur et à l'extérieur du véhicule, et les émissions de fumée et de composés chimiques nuisibles.

Pour faciliter ces différents objectifs, les constructeurs de véhicules portent des indications sur les cadrans de compte-tours dont certains véhicules sont équipés. Ainsi, dans la mesure où le chauffeur surveille le compte-tours et où il tient compte de ses informations, il peut éviter de faire fonctionner le moteur de façon prolongée hors de la zone recommandée. Les différentes zones du compte-tours sont souvent repérées par des plages colorées.

Les brevets DE 2 509 354 et FR 2 265 568 illustrent l'état antérieur de la technique dans ce domaine.

Cependant ceci ne constitue qu'une première approche en direction du but visé, puisque la surveillance ne prend en considération que la vitesse du moteur, en ignorant la charge de ce dernier. On sait qu'en fait, pour donner une définition complète des conditions de fonctionnement à privilégier, il ne suffit pas de limiter la vitesse du moteur, il faut également tenir compte de la charge.

L'invention a pour but de réaliser un procédé et un dispositif permettant de telles indications, en comparant les conditions de fonctionnement réelles aux conditions de fonctionnement souhaitables, et en indiquant au besoin la manœuvre à effectuer pour se trouver dans ces conditions de fonctionnement souhaitables.

Un procédé suivant l'invention, pour l'aide à la conduite véhicule routier, est caractérisé en ce qu'il comprend les opérations suivantes :

— mesure de la vitesse et de la charge du moteur ;

— détermination du point de fonctionnement du moteur sur le diagramme caractéristique charge/vitesse ;

— détermination de l'état de la boîte de vitesse ;

— estimation de la position des différents points de fonctionnement possibles par rapport aux plages à égale consommation de carburant du diagramme charge/vitesse, et des possibilités de fonctionner dans d'autres rapports de la boîte de vitesses ;

— indication éventuelle conseillant la nécessité d'un changement de rapport, et désignant le rapport conseillé.

Suivant une caractéristique supplémentaire de l'invention,

— si le point de fonctionnement réel du moteur est dans une plage de rendement optimal du moteur, il n'y a aucune indication ;

— s'il existe un autre point de fonctionnement qui nécessite un changement de rapport, il se produit une indication sonore et/ou lumineuse de procéder à ce changement de rapport avec une indication pour le choix d'un rapport supérieur et une autre indication pour le choix d'un rapport inférieur.

Suivant une caractéristique supplémentaire de l'invention, les indications sont dirigées vers un tableau d'affichage.

Suivant une variante de l'invention, les indications pilotent un automatisme de boîte de vitesses.

Un dispositif pour la mise en œuvre du procédé suivant l'invention est caractérisé en ce qu'il comprend :

— des capteurs pour mesurer la vitesse et la charge du moteur ;

— un capteur pour déterminer l'état de la boîte de vitesses ;

— un calculateur pour traiter les informations reçues par l'intermédiaire des capteurs ;

— un dispositif d'affichage sonore et/ou visuel.

Suivant une caractéristique supplémentaire de l'invention, le capteur utilisé pour mesurer la vitesse du moteur est constitué par un alternateur tachymétrique entraîné par l'arbre à cames du moteur.

Suivant une caractéristique supplémentaire de l'invention, le capteur utilisé pour mesurer la charge du moteur est constitué par un capteur de débit de carburant.

Suivant une variante de l'invention, les capteurs mesurant la vitesse et la charge du moteur sont constitués par un seul et même capteur de pression d'injection en liaison avec une pompe d'injection de combustible.

Le dessin annexé, donné à titre d'exemple non limitatif, permettra de mieux comprendre les caractéristiques de l'invention.

Figure 1 est un diagramme couple/régime d'un moteur Diesel.

Figure 2 est un diagramme blocs représentant schématiquement un dispositif pour la mise en œuvre du procédé suivant l'invention.

Figure 3 montre un tableau d'affichage de ce dispositif.

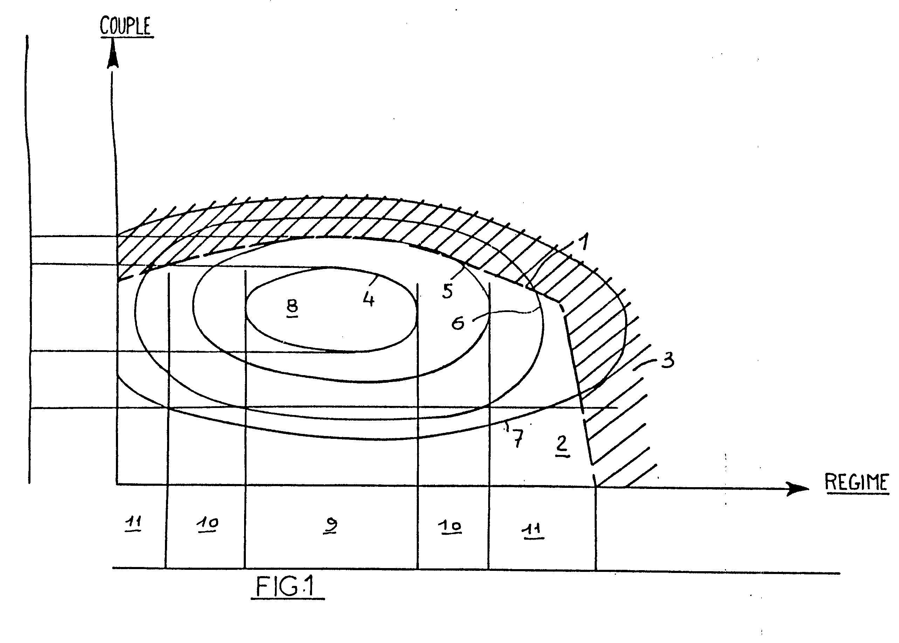

On a représenté sur la figure 1 le diagramme couple/régime d'un moteur Diesel. Sur ce diagramme, on porte en abscisses la vitesse du moteur, et en ordonnées la charge du moteur.

La courbe 1 constitue la courbe de charge maximale, cette courbe séparant une zone 2 d'une zone hachurée 3. Compte tenu du réglage de la pompe d'injection du moteur, la zone 2 constitue la zone de fonctionnement du moteur. Sur ce diagramme, on a tracé des courbes fermées 4, 5, 6, 7 qui constituent des courbes d'égale consommation de carburant.

La consommation la plus faible s'observe à l'intérieur de la courbe centrale 4, dans une plage 8 qui constitue la plage de rendement optimal du moteur.

On a indiqué, au-dessous du diagramme, et en face des zones correspondantes, un exemple de coloration des plages de vitesses du cadran du compte-tours. Ainsi, la plage 8 correspond sur le cadran du compte-tours à une plage verte 9 tandis que l'on trouve de part et d'autre de cette plage 9 deux plages orange 10, et deux plages rouges 11.

On sait que l'utilisation de plages colorées sur le cadran du compte-tours est classique. Cependant, on voit qu'elle n'est pas suffisante, du fait qu'elle ne tient pas compte de la charge du moteur, cette charge intervenant dans la détermination des plages de consommation du diagramme.

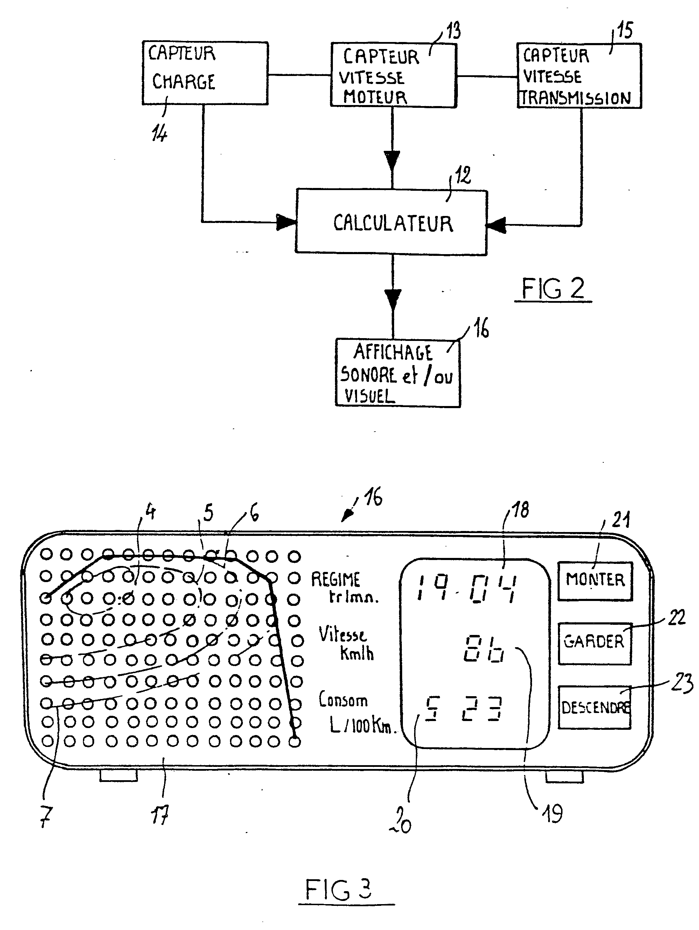

Suivant l'invention, on prévoit un dispositif conforme au schéma de la figure 2, c'est-à-dire comprenant un calculateur 12 en liaison avec trois capteurs, à savoir :
— un capteur 13 mesurant la vitesse du moteur
— un capteur 14 mesurant la charge du moteur
— un capteur 15 déterminant l'état de la boîte de vitesses, et en liaison avec un dispositif d'affichage sonore et/ou visuel 16.

Le capteur 13 peut être choisi parmi les capteurs suivants :
— alternateur ou dynamo tachymétrique entraîné par le moteur ;
— capteurs à variation de reluctance ou à variation de pertes par courants de Foucault placés devant un disque denté ou perforé entraîné par le moteur ;
— capteur de mouvement alternatif synchrone au régime du moteur en liaison avec une aiguille d'injecteur, avec une soupape, ou avec tout autre organe du moteur animé d'un mouvement alternatif ;
— capteur de pression branché sur les tubes d'injecteurs ;
— alternateur tachymétrique entraîné par l'arbre à cames du moteur ;
— capteur de pression d'injection.

Le capteur 14 peut être choisi parmi les capteurs suivants :
— capteur de position à la pédale d'accélérateur dans le cas des moteurs où cette position détermine directement la charge. Ceci est le cas pour les moteurs à carburateur, les moteurs à injection d'essence et les moteurs Diesel à régulateur « mini-maxi ». Le capteur peut aussi être placé en un point quelconque de la commande d'accélération au lieu d'être placé simplement sur la pédale correspondante ;

— capteur de position de l'organe de commande du débit de carburant injecté, dans le cas de moteurs munis de régulateurs « toute-vitesse ». Ce capteur peut être disposé sur la pompe d'injection, ou à l'intérieur de cette pompe. Il peut être en liaison avec la crémaillère de commande de la pompe d'injection ;
— capteur de pression disposé sur un tube d'injecteur dans le cas d'un moteur à carburateur, ou disposé sur tout autre dispositif de dosage du combustible ;
— capteur de pression statique ou dynamique branché sur les tubulures d'admission d'air du moteur, le débit d'air lié à la charge ;
— capteur de la pression interne des cylindres ;
— capteur mesurant la température des gaz d'échappement.

Un exemple de dispositif d'affichage est donné sur la figure 3.

Ce dispositif d'affichage visuel comprend :
— un tableau lumineux 17 constituant une matérialisation du diagramme couple/régime, et comprenant un réseau de lampes, ou de photodiodes, ce tableau portant le tracé de la courbe de pleine charge 1 et des courbes d'iso-consommation 4, 5, 6, 7, la lampe allumée indiquant le point de fonctionnement du moteur. Ce tableau peut se présenter sous la forme d'un écran dépoli, avec déplacement d'un spot lumineux ou d'un index commandé mécaniquement ;
— des modules 18, 19 et 20 d'affichage numérique indiquant respectivement les valeurs instantanées du régime du moteur, de la vitesse du véhicule et de la consommation en carburant. Le module 20 peut être prévu avec une fréquence d'affichage de 15 ou 30 secondes, une même valeur instantanée restant affichée pendant la durée correspondante. On peut prévoir d'autres modules d'affichage pour indiquer d'autres données de fonctionnement du moteur et du véhicule, telles que la charge du moteur, le couple du moteur, et la consommation spécifique ;
— des voyants lumineux 21, 22 et 23 indiquant respectivement les nécessités de monter un rapport de boîte de vitesses, de conserver le rapport engagé, ou de descendre un rapport. L'un de ces trois voyants reste toujours allumé.

Les diverses informations données par le dispositif d'affichage peuvent être données simultanément ou non, on peut aussi prévoir un interrupteur général de bord pour annuler momentanément les effets du dispositif. Les voyants lumineux 21, 22 et 23 peuvent être accompagnés ou remplacés par des signaux sonores, par exemple à l'aide de vibreurs, l'indication visuelle de ces voyants peut aussi être renforcée par un clignotement.

Le calculateur 12 est prévu pour traiter les signaux correspondant aux paramètres mesurés, ces signaux étant fournis par les différents capteurs et représentant :
— la vitesse du moteur ;
— la charge du moteur ;
— la vitesse du véhicule.

Le rassemblement de ces trois paramètres, et leur traitement simultané, constituent des caractéristiques originales de la présente invention, permettant :

— la détermination du point de fonctionnement du moteur sur le diagramme charge/vitesse ;

— l'indication du rapport de boîte de vitesses utilisé, de la position de point mort, ou de la position débrayée ;

— le calcul de la consommation kilométrique instantanée et/ou moyenne.

Pour adapter le dispositif à un véhicule donné, il faut tenir compte notamment des données suivantes :

— caractéristiques d'iso-consommation du moteur, pour la détermination des courbes d'iso-consommation 4 à 7 (fig. 1 et 3) ;

— courbe de pleine charge 1 du moteur ;

— valeur des différents rapports de la boîte de vitesses ;

— éventuellement, programme de traitement du signal de pression d'injection, dans le cas où le même capteur de pression d'injection est utilisé à titre de capteur 13 et de capteur 14 simultanément ;

— valeur des coefficients de transmission, pour déterminer la vitesse du véhicule.

Le procédé de traitement des informations du dispositif suivant l'invention est le suivant :

— détermination du point de fonctionnement du moteur sur le diagramme charge-vitesse ;

— estimation des possibilités de fonctionner dans d'autres rapports de boîte de vitesses ;

— estimation de la position des différents points de fonctionnement possibles par rapport aux caractéristiques d'iso-consommation ;

— fourniture d'une information :

si le point de fonctionnement utilisé est le mieux placé, cet état de chose se traduisant par l'allumage du voyant 22 ;

s'il existe un point de fonctionnement mieux placé que le point de fonctionnement utilisé, l'indication de la nécessité de procéder à un changement de rapport se traduisant par l'allumage de l'un des deux voyants 21 et 23, et éventuellement par l'excitation d'un vibreur. On peut prévoir des voyants indiquant quel est le nouveau rapport à engager.

Ce dispositif d'aide à la conduite est utilisable avantageusement à titre didactique sur des véhicules à l'usage des moniteurs de conduite, pour la formation des conducteurs de poids lourds.

Le même dispositif peut équiper les véhicules classiques de service, éventuellement sous une forme plus ou moins allégée, par exemple par la suppression du tableau lumineux 17 (fig. 3).

Ce dispositif peut aussi piloter directement un automatisme de boîte de vitesses.

**Revendications**

1. Procédé pour l'aide à la conduite d'un véhicule routier caractérisé en ce qu'il consiste :

— à mesurer la vitesse et la charge du moteur ;

— à déterminer, à partir des données précédentes, le point de fonctionnement du moteur sur le diagramme caractéristique charge/vitesse ;

— à déterminer l'état de la boîte de vitesses, c'est-à-dire à déterminer quel est le rapport de vitesses éventuellement engagé ;

— à estimer la position des différents points de fonctionnement possibles par rapport aux plages à égale consommation de carburant du diagramme charge/vitesse, et par rapport aux possibilités de fonctionnement avec d'autres rapports de la boîte de vitesses ;

— à indiquer éventuellement d'une part la nécessité d'un changement de rapport, et d'autre part le rapport conseillé.

2. Procédé suivant la revendication 1, caractérisé en ce que :

— si le point de fonctionnement réel du moteur est dans une plage de rendement optimal du moteur, il n'y a aucune indication ;

— s'il existe un autre point de fonctionnement mieux placé, qui implique un changement de rapport, une indication sonore et/ou lumineuse conseille un changement de rapport.

3. Procédé suivant la revendication 2, caractérisé en ce que les indications sont dirigées vers un tableau d'affichage.

4. Procédé suivant la revendication 1, caractérisé en ce que les indications pilotent un automatisme de boîte de vitesses.

5. Procédé suivant l'une quelconque des revendications précédentes, caractérisé en ce que l'état de la boîte de vitesses est déterminée par le calcul, notamment grâce à un capteur de vitesses mesurant la vitesse du véhicule.

6. Dispositif pour la mise en œuvre du procédé suivant l'une quelconque des revendications précédentes, caractérisé en ce qu'il comprend :

— des capteurs (13-15) permettant de mesurer la vitesse et la charge du moteur, et de déterminer l'état de la boîte de vitesses ;

— un calculateur (12) pour traiter les informations reçues des capteurs ;

— un dispositif (16) d'affichage sonore et/ou visuel.

7. Dispositif suivant la revendication 6, caractérisé en ce que le capteur (13) mesurant la vitesse du moteur est constitué par un alternateur tachymétrique entraîné par l'arbre à cames du moteur.

8. Dispositif suivant l'une quelconque des revendications 6 et 7, caractérisé en ce que le capteur (14) mesurant la charge du moteur est constitué par un capteur de débit de carburant.

9. Dispositif suivant la revendication 6, caractérisé en ce qu'il utilise pour mesurer la vitesse et la charge du moteur un seul et même capteur de pression d'injection en liaison avec une pompe d'injection de combustible.

**Claims**

1. Method to assist in the driving of a road vehicle, characterised in that it consists in :

— measuring the speed and the load of the engine ;

— determining from the preceding data the point of operation on the characteristic load/speed graph ;

— determining the state of the gearbox, that is to say, determining what is the speed ratio engaged ;

— estimating the different possible points of operation in relation to the equal fuel consumption ranges of the load/speed graph, and in relation to the operating possibilities with other gearbox ratios ;.

— if needs be to indicate on the one hand the need to change gear, and on the other hand the new ratio advised, the vehicle speed remaining constant.

2. A method according to claim 1, characterised in that :

— if the actual operating point is within a range of optimum output, there is no indication ;

— if there is another better point, which implies a change of ratio, an audible and/or visual signal advises this change of ratio.

3. A method according to either one of the preceding claims, characterised in that the signals, speed and load of the engine, the position of the point of operation on the load/speed graph and on the curves of equal consumption, the necessity or not to change ratio, are directed to an indicator panel.

4. A method according to claim 1, characterised in that the signals, speed and load of the engine, the position of the point of operation on the load/speed graph and on the curves of equal consumption, the necessity or not to change ratio, control an automatic operation of the gearbox.

5. A method according to any one of the preceding claims, characterised in that the state of the gearbox is determined by calculation, mainly owing to a speed sensor measuring the speed of the vehicle.

6. A device for the putting into practice of the method according to the invention defined by any one of the preceding claims, characterised in that it comprises :

— sensors (13-15), to allow the measurement of the speed and load of the engine, and to determine the state of the gearbox ;

— a calculator (12), to process the information received from the sensors ;

— an audible and/or visual signalling device (16).

7. A device according to claim 6, characterised in that the sensor (13) measuring the speed of the engine is constituted by a tachometric alternator driven by the camshaft of the engine.

8. A device according to either one of the preceding claims 6 and 7, characterised in that the sensor (14) measuring the load of the engine is constituted by a sensor of the fuel flow.

9. A device according to claim 6, characterised in that it uses for the measurement of the speed and load of the engine the same single sensor of the injection pressure in conjunction with a fuel injection pump.

**Ansprüche**

1. Verfahren zur Erleichterung des Führens eines Straßenfahrzeuges, dadurch gekennzeichnet, daß es das folgende umfaßt :

— Die Geschwindigkeit und die Belastung des Motors werden gemessen ;

— Aus den vorgenannten Daten wird auf dem charakteristischen Belastungs-Geschwindigkeits-Diagramm der Betriebspunkt des Motors ermittelt ;

— Der Betriebszustand des Getriebes wird ermittelt, d.h. das Übersetzungsverhältnis ;

— Es wird die Position der verschiedenen möglichen Betriebspunkte in Bezug auf die Bereiche gleichen Kraftstoffverbrauches des Belastungs-Geschwindigkeits-Diagrammes und in Bezug auf die Möglichkeiten des Arbeitens bei anderen Übersetzungsverhältnissen bestimmt ;

— Gegebenenfalls werden einerseits die Notwendigkeit einer Änderung des Übersetzungsverhältnisses und andererseits das neu empfohlene Übersetzungsverhältnis angezeigt, wobei die Fahrzeuggeschwindigkeit konstant bleibt.

2. Verfahren nach Anspruch 1, dadurch gekennzeichnet, daß :

— falls der tatsächliche Betriebspunkt des Motors in einem optimalen Wirkungsgradbereich liegt, keine Anzeige erfolgen ;

— falls ein vorteilhafterer Punkt vorliegt, der eine Änderung des Übersetzungsverhältnisses beinhaltet, eine akustische und/oder visuelle Anzeige dieser Änderung des Übersetzungsverhältnisses empfiehlt.

3. Verfahren nach einem der vorausgegangenen Ansprüche, dadurch gekennzeichnet, daß die Anzeigen der Geschwindigkeit und Belastung des Motors, der Position des Betriebspunktes in Bezug auf das Verhältnis im Belastungs-Geschwindigkeits-Diagramm und die Kurvengleichen Verbrauches sowie eine Aussage über die Notwendigkeit der Änderung des Übersetzungsverhältnisses einer Anzeigetafel eingespeist werden.

4. Verfahren nach Anspruch 1, dadurch gekennzeichnet, daß die Anzeigen bezüglich Geschwindigkeit und Belastung des Motors, Lage des Betriebspunktes in Bezug auf das Belastungs-Geschwindigkeits-Diagramm und in Bezug auf die kurvengleichen Kraftstoffverbrauches sowie über die Frage der Änderung des Übersetzungsverhältnisses eine automatische Einrichtung des Getriebes steuern.

5. Verfahren nach einem der vorausgegangenen Ansprüche, dadurch gekennzeichnet, daß der Betriebszustand des Getriebes durch Berechnung ermittelt wird, insbesondere mittels eines Geschwindigkeitsmessers, der die Geschwindigkeit des Fahrzeuges misst.

6. Verfahren zur Durchführung des erfindungsgemäßen Verfahrens, definiert durch einen der vorausgegangenen Ansprüche, dadurch gekennzeichnet, daß es umfaßt :

— Anzeiger (13-15), die es erlauben, die Geschwindigkeit und die Belastung des Motors zu messen sowie den Betriebszustand des Getriebes zu erfassen ;

— einen Rechner (12) zum Verarbeiten der von den Anzeigern aufgenommenen Informationen ;

— eine akustische und/oder visuelle Anzeigevorrichtung (16).

7. Vorrichtung nach Anspruch 6, dadurch gekennzeichnet, daß der Anzeiger (13) der die Geschwindigkeit des Motors misst, aus einem tachometrischen Wechselstrom-Generator besteht, der von der Nockenwelle des Motors angetrieben wird.

8. Vorrichtung nach einem der vorausgegangenen Ansprüche 6 und 7, dadurch gekennzeichnet, daß der Anzeiger (14), der die Belastung des Motors misst, aus einem Anzeiger für den Kraftstoffverbrauch besteht.

9. Vorrichtung nach Anspruch 6, dadurch gekennzeichnet, daß sie zum Messen der Geschwindigkeit und der Belastung des Motors einen einzigen und selben Anzeiger des Einspritzdruckes in Verbindung mit einer Kraftstoff-Einspritzpumpe verwendet.

0 007 881

FIG.1

1

FIG 2

FIG 3

2